(19) Europäisches Patentamt
European Patent Office
Office européen des brevets

(11) **EP 4 023 487 A1**

(12) **EUROPEAN PATENT APPLICATION**

(43) Date of publication:
**06.07.2022 Bulletin 2022/27**

(21) Application number: **21150101.0**

(22) Date of filing: **04.01.2021**

(51) International Patent Classification (IPC):
***B60L 58/21*** *(2019.01)*

(52) Cooperative Patent Classification (CPC):
**B60L 58/21;** B60L 2200/18; B60L 2240/547;
B60L 2240/549; B60L 2270/20

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Volvo Truck Corporation**
**405 08 Göteborg (SE)**

(72) Inventors:
• **KLINTBERG, Anton**
**423 63 Torslanda (SE)**
• **ALTAF, Faisal**
**421 43 Västra Frölunda (SE)**
• **FARAG, Bassem**
**445 55 Göteborg (SE)**

(74) Representative: **Valea AB**
**Box 1098**
**405 23 Göteborg (SE)**

(54) **A METHOD FOR CONTROLLING ELECTRICAL CONNECTION OF BATTERY PACKS**

(57) The invention relates to a method for controlling electrical connection of a plurality of battery packs (2) of an electric energy storage system (1) of a vehicle (100) to a load (4) during operation of the vehicle, the plurality of battery packs being configured to be selectively connected in parallel to the load, the method comprising the steps of:
- obtaining operational data relating to present operating conditions of the electric energy storage system, wherein the operational data include at least a voltage of each one of the plurality of battery packs;
- based on at least an operational mode of the electric energy storage system and on the voltage of each one of the battery packs, and by allowing simultaneous connection of at least two battery packs to the load, proposing a connection sequence for electrically connecting at least a subset of the plurality of battery packs to the load;
- electrically connecting at least the subset of battery packs to the load in accordance with the proposed connection sequence.

The method further comprises the step of:
prior to connecting at least the subset of battery packs to the load, and based on at least an internal resistance of each one of the battery packs within at least the subset of battery packs, determining whether the proposed connection sequence fulfils a predetermined connection condition, wherein the step of connecting at least the subset of battery packs to the load is only performed if the connection condition is considered to be fulfilled.

Fig. 1

**Description**

TECHNICAL FIELD

The invention relates to a method for controlling electrical connection of a plurality of battery packs of an electric energy storage system, ESS, such as an ESS of a vehicle. The invention further relates to a computer program, a computer readable medium, a control unit, an electric energy storage system, and a vehicle.

The invention can be applied to any type of electric vehicles; either hybrid electric vehicles (HEVs), plug-in hybrid electric vehicles (PHEVs), battery electric vehicles (BEVs), or Fuel-Cell Electric Vehicles (FCEVs). Although the invention will be described with respect to an electric bus, the invention is not restricted to this particular vehicle, but may also be used in other hybrid or electric vehicles such as electric trucks, electric construction equipment, and electric passenger cars. The invention may also be applied in any other type of electric vehicle such as electric powered construction equipment, electric working machines e.g., wheel loaders, articulated haulers, dump trucks, excavators and backhoe loaders etc. The invention is further applicable in stationary electric energy storage system.

BACKGROUND

Batteries are becoming a more common source of power for providing propulsion for vehicles. Such batteries are often rechargeable batteries and typically include a number of battery cells that may be connected in series or in parallel forming a complete battery pack for the vehicle. Typically, a battery pack includes a number of battery cells.

To increase the energy storage capacity and available electric power of an electrically operated vehicle, more than one battery pack may be installed in the electric energy storage system. Consequently, two or more battery packs may be simultaneously connected to a load, such as the electric motor of the vehicle. By connecting several battery packs in parallel, the available power and energy for propulsion of the vehicle may be increased. However, if the battery packs are imbalanced upon connection, circulation currents may arise between the battery packs and lead to unwanted current spikes. In addition, the circulating currents may reduce the available power of the overall energy storage system for vehicle propulsion. Therefore, such circulating currents and spikes should be avoided.

One way of preventing circulation currents is to measure the terminal voltage of the battery packs and based thereon decide whether to connect the battery packs or not, since a large difference in terminal voltage may indicate that a circulation current may result upon connection. For example, the battery packs may be connected one by one based on their terminal voltage. However, this may not be an optimal way of connecting the battery packs in view of driveability of the vehicle, or to provide a power ability, or state-of-power, of the ESS which is as large as possible. Moreover, parallel connection of battery packs with large differences in available power and/or energy may lead to significant reduction of total power and/or energy of the ESS due to the so-called "weakest link"-issue, i.e., the weakest battery pack become a limiting factor.

US20150194707 discloses a method for controlling connection of batteries within a battery pack including a plurality of batteries configured to be selectively connected in parallel to a load. The method includes connecting the batteries in dependence on their voltage, in ascending order in a charging mode and in descending order in a discharging mode, in order to prevent an occurrence of inrush current.

DEFINITIONS

As used in the context of the present application, the power ability, or state-of-power, SoP, of an electric energy storage system, ESS, is defined by the maximum constant current magnitude or power magnitude with which the ESS can be continuously charged or discharged during the following time horizon of concern, i.e., the prediction time horizon, without violating any battery cell-level operating constraints. The SoP of the ESS during charging is defined by the maximum constant current magnitude or power magnitude with which the ESS can be continuously charged during the prediction time horizon, without violating any battery cell-level operating constraints. Correspondingly, the SoP of the ESS during discharging is defined by the maximum constant current magnitude or power magnitude with which the ESS can be continuously discharged during the prediction time horizon, without violating any battery cell-level operating constraints. The SoP of the ESS may be determined in terms of one or both of current magnitude and power magnitude. The SoP of the ESS may be determined in parallel for a charging and a discharging scenario and may in this case comprise a current and/or power value valid for charging, and a current and/or power value valid for discharging. The SoP of the ESS may also be predicted for only one of a charging and a discharging scenario. The terms state-of-power, SoP, and power ability are used interchangeably throughout this text and are intended to have the same meaning.

As used in the context of the present application, the State-of-Energy, SoE, of a battery unit is given by the ratio of remaining stored electric energy to the total energy capacity of the battery unit at any given time. It may also be understood as a part of the total battery unit energy that is deliverable to a load under given operating conditions, from a present state-of-charge (SoC) level to an empty state of the battery unit.

SUMMARY

A first objective of the invention is to provide an in at least some aspect improved method for controlling electrical connection of a plurality of battery packs of an electric energy storage system, ESS, such as an ESS of a vehicle, and/or to provide an in at least some aspect improved electric energy storage system, such as an ESS for a vehicle. In particular, it is an objective to provide a method for controlling electrical connection of a plurality of battery packs during driving of an electrified vehicle that enables improving the available energy and/or the power ability of the vehicle. Another objective is to provide such a method by means of which an improved driving experience can be achieved. At least the first objective is at least partly achieved by a method according to claim 1.

According to a first aspect of the invention, a method for controlling electrical connection of a plurality of battery packs of an electric energy storage system to a load is provided, the plurality of battery packs being configured to be selectively connected in parallel to the load. The electric energy storage system may be an ESS of a vehicle, the method being intended for controlling electrical connection of the plurality of battery packs to the load during operation of the vehicle. The method comprises the steps of:

- obtaining operational data relating to present operating conditions of the electric energy storage system, wherein the operational data include at least a voltage of each one of the plurality of battery packs;
- based on at least an operational mode of the electric energy storage system and on the voltage of each one of the battery packs, and by allowing simultaneous connection of at least two battery packs to the load, proposing a connection sequence for electrically connecting at least a subset of the plurality of battery packs to the load;
- electrically connecting at least the subset of battery packs to the load in accordance with the proposed connection sequence.

The method further comprises the step of:

- prior to connecting at least the subset of battery packs to the load, and based on at least an internal resistance of each one of the battery packs within at least the subset of battery packs, determining whether the proposed connection sequence fulfils a predetermined connection condition, wherein the step of connecting at least the subset of battery packs to the load is only performed if the connection condition is considered to be fulfilled.

By taking not only the voltage into account in determining which battery packs to connect to the load, but also the internal resistance of the battery packs, it is possible to better avoid current spikes upon connection of the battery packs. The internal resistance of the battery packs may be used for predicting circulation currents expected to arise upon connection, and the predetermined connection condition may be set to avoid such circulation currents. Thus, the proposed method enables a feasibility check, by means of which it can be determined whether a proposed connection sequence is actually feasible, i.e., possible to connect, in view of for example predicted circulation currents.

The voltage referred to herein may be a measured terminal voltage and/or an estimated or otherwise derived open circuit voltage, OCV. Using OCV for proposing the connection sequence and/or for determining whether the proposed connection sequence fulfils the predetermined connection condition is advantageous in particular for any battery pack(s) already connected to the load, and/or for any battery packs that are not in a relaxed condition, since the estimated OCV takes e.g., internal resistive losses of the battery packs into account. The OCV of such battery packs may be estimated based on measurement data relating to terminal voltage, current and temperature of the battery packs. Thus, the step of proposing a connection sequence may be based on the estimated OCV of each one of the battery packs, wherein the OCV is in turn determined based on the measurement data. This is particularly useful when the ESS comprises at least one battery pack that is already connected to the load, and/or when at least one disconnected battery pack is not in a relaxed condition, in which case the terminal voltage of the connected and/or unrelaxed at least one battery pack likely differs from its OCV. The terminal voltage may in that case not be sufficient for predicting currents expected to arise after connection of additional battery packs. In case of connected and/or unrelaxed battery packs, the OCV value may include both true OCV as well as any slowly varying dynamic polarizations, i.e., slowly varying voltage losses can be lumped together with true OCV to get a so-called quasi-OCV value. This is especially relevant when using a zero-order multi-battery model for connection control. For disconnected and relaxed battery packs, the OCV is equal to, or essentially equal to, the terminal voltage, and for those battery packs, it will therefore be sufficient to use the terminal voltage as the voltage.

The open circuit voltage, OCV, can be estimated using measured terminal voltage and estimated internal voltage losses, wherein the internal voltage losses are estimated based on measured current and estimated internal resistance. A prediction model may be used in the estimation, such as an equivalent circuit model (also referred to as a Thevenin model). A plurality of different methods exist for estimating OCV on the basis of measurement data relating to operating conditions. For example, estimators such as non-linear estimators, e.g., some type of Kalman filters, and variants of recursive nonlinear observers, may be used. The OCV may also be estimated using optimization-based estimation schemes, e.g., a moving horizon estimation, total least squares, recursive-least-squares, etc.

The load should be a common load, i.e., a node or a collection of nodes to which all of the battery packs are electrically connected in parallel when switched on. The common load may in turn comprise several sub-loads, such as electric motors and auxiliary devices of the vehicle. Upon connection of two or more battery packs to the load, the battery packs connected to the load will also be connected to one another.

Simultaneous connection is herein to be understood as "at the same connection instant", i.e., the battery packs are allowed to be electrically connected at the same connection instant to the load, such as by switching them on, i.e., closing contactors, simultaneously. The first proposed connection sequence may typically involve simultaneous connection of all, or most of, the battery packs of the ESS, or of at least two battery packs of the ESS. One or more battery packs may in some cases already be connected to the load when the method is initiated.

The operational mode may be a charging mode or a discharging mode. It is well-known to connect battery packs based on their terminal voltage during charging and discharging, respectively. During discharging, at least the battery pack with the highest terminal voltage may be included in the subset so as to be connected to the load at a first connection instant, while as during charging, at least the battery pack with the lowest terminal voltage may be included in the subset so as to be connected to the load at a first connection instant. Herein, the OCV may be used in addition to or instead of the terminal voltage as described above.

The plurality of battery packs may be sorted according to the voltage, i.e. the terminal voltage and/or the OCV, of each one of the battery packs, wherein the connection sequence may be determined such that, in a charging mode of the electric energy storage system, the battery pack or battery packs having the lowest voltage are connected at a first connection instant, and a battery pack or battery packs having a higher voltage are connected subsequently, in ascending order, after the first connection instant. Correspondingly, in a discharging mode, the battery pack or battery packs having the highest voltage are connected at a first connection instant, and a battery pack or battery packs having a lower voltage are connected subsequently, in descending order, after the first connection instant.

The internal resistance of each battery pack may be derived from the obtained operational data from the ESS, such as measurement data relating to current, voltage and temperature. The internal resistance as well as the open circuit voltage can be either estimated inside a battery management unit of each battery pack and be input as operational data to the method described herein, or it may be estimated as a part of the present method from received measurement data. Thus, the operational data may include measurement data and/or derived data such as internal battery states, e.g., internal resistance and OCV.

Optionally, if the connection condition is not considered to be fulfilled, at least the steps of proposing a connection sequence and determining whether the proposed connection sequence fulfils the predetermined connection condition are repeated until the connection condition is considered to be fulfilled. Also, the step of obtaining operational data may be repeated, although not necessary at this point. The repeated proposing and checking of connection sequences may instead be performed based on the same input operational data. Thus, internal iterations based on internal virtual feedback as well as external iterations based on external real feedback may be carried out. In short, for each given external feedback data set regarding the present operating conditions of the battery packs, multiple internal iterations may be carried out until a feasible proposed connection sequence is found under those given operating conditions. In the next external iteration, new operational data relating to the present operating conditions are provided, which may allow for determination of a different feasible connection sequence, identified through multiple internal iterations.

Optionally, if the connection condition is not considered to be fulfilled for any proposed connection sequence involving simultaneous connection of at least two battery packs, the method comprises:

- subject to a predefinable power constraint, connecting a single battery pack of the plurality of battery packs to the load;
- optionally, determining an earliest point in time at which the steps of proposing a connection sequence and determining whether the proposed connection sequence fulfils the predetermined connection condition will be repeated after connection of the single battery pack.

By using a multi-battery model of the ESS, it is possible to predict a time until connection of more than one battery pack may be possible. The earliest point in time may be set based on such a prediction. It may be set to that particular time, or to a fraction of that time. The power constraint may be set so that the single battery pack is connected given that it will provide sufficient power for propelling the vehicle. In this way, an undesired stop-on-the-road of the vehicle will be prevented. The battery pack to connect can be selected simply based on voltage or based on state-of-power (SoP). Thus, a battery pack with the highest voltage or highest dischargeable SoP may be connected during discharging, such that sufficient power to propel the vehicle is provided. Correspondingly, a battery pack with lowest voltage or highest chargeable SoP may be connected during charging, such that some minimum regenerative power requirement is met, especially when travelling down a hill.

If at least two battery packs are not connectable, and the connection of a single battery pack to the load is allowed as mentioned above, a so-called "time-to-connect" may be predicted. Only after that time has elapsed, or after a predetermined fraction of that time has elapsed, the steps of proposing a connection sequence and determining whether the proposed connection sequence fulfils the predetermined connection condition are iterated. This can reduce computational cost as well as contribute to a more predictable driving experience without stop-on-the-road

Optionally, the predetermined connection condition comprises at least a predetermined circulation current connection condition relating to a circulation current expected to flow between the battery packs upon electrical connection of said subset of battery packs, and optionally also a predetermined state-of-power connection condition relating to a total state-of-power of the electric energy storage system after electrical connection of said subset of battery packs in accordance with the proposed connection sequence, and/or optionally a predetermined state-of-energy connection condition relating to a total state-of-energy of the electric energy storage system after electrical connection of said subset of battery packs in accordance with the proposed connection sequence.

A circulation current is normally only expected to flow between unbalanced battery packs. Such a circulation current may cause undesirable current spikes within the ESS. Components of the ESS, such as battery cells, contactors, fuses etc., are normally designed for a particular current flow, and may be harmed by such current spikes. By setting a circulation current connection condition which must be fulfilled in order to connect the battery packs in accordance with the proposed connection sequence, this may be avoided.

Optionally, the step of determining whether the proposed connection sequence fulfils the predetermined connection condition comprises at least:

- based on at least the internal resistance and an open circuit voltage of each one of the battery packs, predicting a magnitude of the circulation current expected to flow between the battery packs upon electrical connection of said subset of battery packs in accordance with the proposed connection sequence,
- determining whether the predicted magnitude of the circulation current is within a predetermined allowable range.

By predicting the magnitude of the circulation current, it can be determined whether battery cells, contactors, fuses etc. of the electric energy storage system will be safe, i.e., not harmed by excessive current spikes, upon connection of the battery packs. Thus, it will be ensured that components of the ESS are not damaged by circulation currents that they are not designed to handle. The magnitude of the circulation current may be predicted using a multi-battery prediction model. Such a multi-battery prediction model, preferably a dynamic multi-battery model, can predict information relating to a current split between the battery packs depending on the estimated difference in state-of-charge (SoC) level, state-of-health (SoH) and temperature between the battery packs. A dynamic state-space model of a parallel multi-battery system may be used, which takes as input a total electric energy storage system current, initial SoC, SoH, and temperature values of each battery pack, and gives as output individual battery pack currents. Such a model is scalable and configurable for any number of battery packs and takes into consideration connection resistances and ageing information in terms of capacity fade and impedance growth. It enables model-based predictions of dynamic current distribution/split among parallel battery packs in the ESS, giving the insight about the transient and steady-state responses of each individual battery unit/pack. Further, it enables understanding the dynamic interactions (i.e., circulation currents) among the battery packs under imbalances and the effect that various internal and external factors may have on the current/power splitting among the battery packs. Connection or disconnection of any battery pack within this multi-battery model can be achieved by instantaneously toggling between low and high resistance values. In short, a disconnected battery pack, i.e., open contactors, is emulated by putting its resistance infinitely high, or an order of magnitude higher than other connected battery packs. When it is desired to connect that battery pack, i.e., closed contactors, its resistance is lowered to its actual value in a single step. This will enable using the same state-space model for emulating current transients just after the connection instance as well as power split between battery packs during normal steady-state operation long after connection.

The predetermined circulation current connection condition may be regarded as a necessary but not sufficient condition for optimal operation of the ESS. If the predicted magnitude of the circulation current is within the predetermined allowable range, the predetermined circulation current connection condition is considered to be fulfilled, and, if no other connection condition has been defined, the predetermined connection condition is considered fulfilled. However, to further improve the operation of the ESS, it is desirable to also require fulfilment of a predetermined state-of-power (SoP) connection condition, which may be set with the aim to maximize the total SoP of the ESS and to avoid reduction of the total SoP of the ESS after connection of any additional battery pack to already connected ones.

Optionally, the predetermined connection condition comprises the predetermined state-of-power connection condition, and the step of determining whether the proposed connection sequence fulfils the predetermined connection condition comprises predicting a total expected state-of-power, SoP, of the ESS upon electrical connection of said subset of battery packs in accordance with the proposed connection sequence. The predetermined state-of-power connection condition may be considered to be fulfilled if the predicted total expected SoP is above a predetermined total SoP threshold. For example, the total expected SoP of the ESS can be computed by using the SoP of each individual battery pack as a constraint, and then use a multi-battery model to predict the maximum total ESS current and/or power such that a predicted power flow through at least one of the connected battery packs reaches its SoP constraint, i.e., so that at least that one of the connected battery packs is operated at its SoP limit.

Optionally, the predetermined connection condition comprises the predetermined state-of-power connection condition, and the step of determining whether the proposed connection sequence fulfils the predetermined connection condition comprises:

- determining a state-of-power, SoP, of each one of the battery packs within the subset of battery packs,
- determining whether a difference in state-of-power between the battery packs within the subset is below a predetermined state-of-power difference threshold.

The predetermined state-of-power connection condition may be considered fulfilled if the difference is below the state-of-power difference threshold. If the battery packs within the subset have a large spread in state-of-power, it may be undesirable to connect them even though the expected circulation current is low. For instance, if one battery pack in the proposed connection sequence has a significantly lower SoP than other battery packs, it may be determined that that the proposed connection sequence cannot be applied, due to the mismatch in SoP. Such a mismatch in SoP of individual battery packs may otherwise lead to that the total SoP of the ESS will be heavily impacted since it will be limited by the weakest of all battery packs, i.e., the battery pack having the lowest SoP.

The predetermined connection condition may also comprise a predetermined state-of-energy, SoE, connection condition. In this case, the step of determining whether the proposed connection sequence fulfils the predetermined connection condition comprises predicting a total expected SoE of the ESS upon electrical connection of said subset of battery packs in accordance with the proposed connection sequence. The predetermined SoE connection condition may be considered to be fulfilled if the predicted total SoE of the ESS is above a predetermined total SoE threshold. The total available energy of the ESS can be particularly important in some situations. For example, when the ESS is used in a vehicle, the user may need to limp to a workshop at a very low speed, in which case the total available energy from the ESS becomes more important than the ESS power.

The connection conditions described above may be combined, such that e.g., all conditions, or a subset of conditions, must be fulfilled in order to connect the battery packs to the load in accordance with the proposed connection sequence.

Optionally, the step of proposing a connection sequence comprises:

- identifying the subset of battery packs to connect, and
- proposing a point in time at which each battery pack within the subset should be connected, such as simultaneously with and/or subsequently to the other battery packs within the subset.

Optionally, the method further comprises:

- setting a prioritization strategy for electrical connection of the battery packs to the load;

wherein the set prioritization strategy is taken into account in the step of proposing said connection sequence.

Optionally, the prioritization strategy is one of a first prioritization strategy, a second prioritization strategy, and a third prioritization strategy, wherein:

- using the first prioritization strategy, the connection sequence is proposed so as to maximize the state-of-power of the electric energy storage system,
- using the second prioritization strategy, the connection sequence is proposed so as to minimize the total number of connection instants at which at least one battery pack will be connected to the load, and
- using the third prioritization strategy, the connection sequence is proposed so as to maximize the state-of-energy of the electric energy storage system.

The different prioritization strategies may not always lead to different results in terms of proposed connection sequences, since e.g., maximizing the state-of-power may in many cases also lead to a minimized number of connection instants and vice versa. Thus, the strategies may not be completely mutually exclusive. However, if a large number of iterations are needed before a feasible connection sequence is identified, the feasible connection sequences may differ depending on the selected prioritization strategy.

The prioritization strategy may be pre-set, or it may be set in dependence on e.g., driver preferences or a driving mode of the vehicle. By maximizing the SoP, vehicle acceleration ability is ensured, while as by minimizing the number of connection instances, the driving experience may be more comfortable, since each connection attempt temporarily lowers the propulsion power.

Optionally, the predetermined connection condition is set in dependence on the selected prioritization strategy. For example, if the prioritization strategy is selected so as to primarily prioritize the number of connection instants above SoP, the total SoP threshold may be set to a lower value than if the prioritization strategy is selected so as to primarily maximize the SoP.

Optionally, the method further comprises:

- repeating the method steps until all battery packs of the electric energy storage system are connected.

As described above, internal as well as external iterations may be used to propose and connect feasible connection sequences.

Optionally, the method further comprises:

- after connection of at least the subset of battery packs to the load, determining whether a predetermined disconnection condition is fulfilled for disconnection of at least one battery pack within the subset of battery packs,
- only if the predetermined disconnection condition is fulfilled, disconnecting the at least one battery pack from the load.

For example, if two battery packs are already connected to each other and to the load, but one of them has a much lower SoP or SoE than the other one, it can be decided to disconnect this limiting battery pack to solve that weakest link issue. The predetermined disconnection condition may be set in correspondence with the connection condition as described above. Correspondingly, a disconnection sequence may be proposed for disconnecting a subset of battery packs such that ESS power and/or energy is maximized, by adapting the strategies described above for disconnection of the battery packs from the load.

The method according to the embodiments can be executed in several different manners. For example, the method may be performed by a control unit during use of the electrical energy storage system by an electric propulsion system of a vehicle in which the ESS is provided. The method may also be performed by different control units. For example, a battery management unit (BMU) of each battery pack may be configured to receive measurement data and estimate internal battery states of the respective battery pack, such as internal resistance (state-of-resistance, SoR), and communicate at least one of the estimated internal battery states to another control unit, e.g., an energy storage system (ESS) control unit. The step of controlling electrical connection of the battery packs may be performed by the ESS control unit, based on the information relating to the estimated battery states received from the BMUs. In some control architectures, one BMU of the ESS may act both as BMU of an individual battery pack, as well as ESS master control unit, in which case this BMU may also be used to execute the method according to the first aspect.

According to a second aspect of the present invention, at least the first objective is achieved by a control unit of an electric energy storage system comprising at least two battery packs configured to be selectively electrically connected in parallel, wherein the control unit is configured to execute the steps of the method according to the first aspect. Effects and features of the second aspect of the invention are largely analogous to those described above in connection with the first aspect.

According to a third aspect of the present invention, there is provided a computer program comprising instructions to cause a computer to execute the steps of the method according to any one of the embodiments of the first aspect. Effects and features of the third aspect of the invention are largely analogous to those described above in connection with the first aspect.

According to a fourth aspect of the present invention, there is provided a computer readable medium having stored thereon the computer program according to the third aspect. Effects and features of the fourth aspect of the invention are largely analogous to those described above in connection with the first aspect.

According to a fifth aspect of the present invention, at least the first objective is achieved by an electric energy storage system comprising at least two battery packs configured to be selectively electrically connected in parallel and a control unit according to the second aspect.

According to a sixth aspect of the present invention, there is provided a vehicle comprising an electric energy storage system according to the fifth aspect.

Further advantages and advantageous features of the invention are disclosed in the following description and in the dependent claims.

BRIEF DESCRIPTION OF THE DRAWINGS

With reference to the appended drawings, below follows a more detailed description of embodiments of the invention cited as examples.

In the drawings:

Fig. 1     shows a vehicle in which a method according to the invention may be implemented,

Fig. 2     is an example embodiment of an electric energy storage system according to the invention;

Fig. 3     is a flow-chart illustrating a method according to an embodiment of the invention,

Fig. 4     is a block diagram illustrating a method according to an embodiment the invention,

Fig. 5     is a diagram illustrating connection sequences proposed in accordance with an example embodiment, and

Fig. 6     is another diagram illustrating connection sequences proposed in accordance with another example embodiment.

The drawings are schematic and not necessarily drawn to scale.

DETAILED DESCRIPTION OF EXAMPLE EMBODIMENTS OF THE INVENTION

In the present detailed description, embodiments of the method according to the present invention are mainly described with reference to an all-electric bus, comprising a propulsion system in the form of battery powered electric motors. However, it should be noted that various embodiments of the described invention are equally applicable for a wide range of hybrid and electric vehicles.

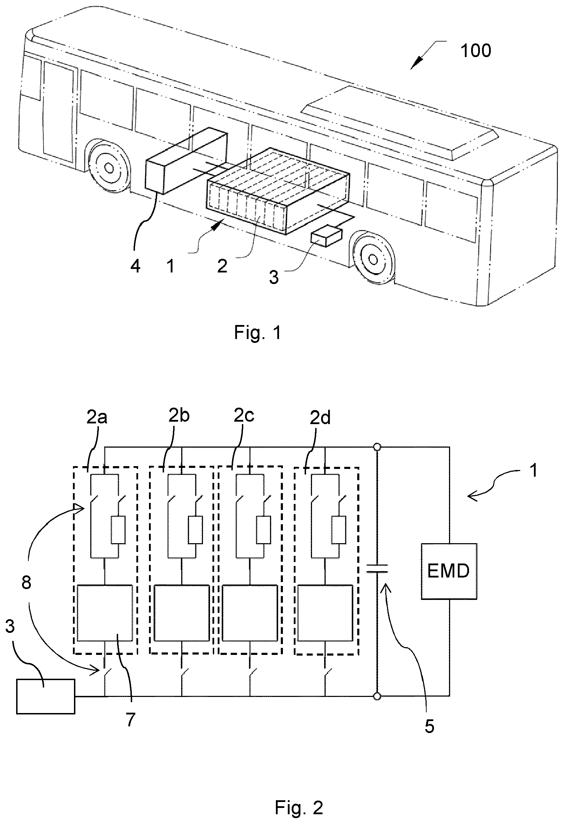

Fig. 1 shows a simplified perspective view of an all-electric vehicle in the form of a bus 100, which according to an embodiment is equipped with an electric propulsion unit 4 for propulsion of the bus. Of course, other loads may be provided in addition to or instead of the electric propulsion unit 4, for example auxiliary systems requiring electric power, and/or an on-board charger, and/or a power take-off.

The bus 100 carries an electric energy storage system (ESS) 1 comprising a plurality of parallel-connected battery packs 2, each battery pack 2 comprising a plurality of battery cells (not shown). The battery cells are connected in series to provide an output DC voltage having a desired voltage level. Suitably, the battery cells are of lithium-ion type, but other types may also be used. The number of battery cells per battery pack may be in the range of 50 to 500 cells, or up to many thousands of cells in the case of small format cells. It is to be noted that each battery pack may include a plurality of battery modules, in turn comprising a plurality of battery cells in the form of e.g. battery cell strings.

Sensor units (not shown) may be arranged for collecting measurement data relating to operating conditions of the ESS, i.e., measuring temperature, voltage and current level of the battery cells. Measurement data from each sensor unit is transmitted to an associated ESS control unit 3, which is configured for managing the ESS 1 during operation of the bus 100 and which is in this case also used for controlling connection of individual battery packs 2 of the ESS 1 to the load 4. The ESS control unit 3 can also be configured for determining parameters indicating and controlling the condition or capacity of the ESS 1, such as the state-of-charge (SoC), the state-of-health (SoH), the state-of-power (SoP), the state-of-capacity (SoQ), the state-of-resistance (SoR) and the state-of-energy (SoE) of the ESS 1, including each battery pack 2. A single control unit 3 is shown, which may be e.g., a so-called Domain Control Unit, DCU, configured to implement complete control functionality on all levels of the ESS. However, it is to be understood that the ESS may instead be provided with multiple control units. For example, the ESS may be provided with battery management units, BMUs (not shown), for managing individual battery units, such as battery packs 2 and/or battery modules, of the ESS 1. The BMU of each battery unit then receives and processes measurement data corresponding to its associated battery unit and also estimates state-of-capacity SoQ(i), SoR(i), SoH(i), and SoC(i). Each BMU then sends this data to the ESS control unit. It is possible to have either a dedicated ESS Master Control Unit or to select one of the BMUs and let it function as an ESS master control unit in addition to its battery unit level functionality. The control unit for controlling connection of individual battery packs 2 of the ESS 1 to the load 4 may also be a separate control unit.

The ESS control unit 3 may include a microprocessor, a microcontroller, a programmable digital signal processor or another programmable device. Thus, the ESS control unit 3 comprises electronic circuits and connections (not shown) as well as processing circuitry (not shown) such that the ESS control unit 3 can communicate with different parts of the bus 100 or with different control units of the bus 100. The ESS control unit 3 may comprise modules in either hardware or software, or partially in hardware or software, and communicate using known transmission buses such a CAN-bus and/or wireless communication capabilities. The processing circuitry may be a general-purpose processor or a specific processor. The ESS control unit 3 comprises a non-transitory memory for storing computer program code and data. Thus, the skilled person realizes that the ESS control unit 3 may be embodied by many different constructions. This is also applicable to other control units of the ESS 1.

Fig. 2 is a circuit diagram schematically illustrating an exemplary ESS 1 including four battery packs 2a, 2b, 2c, 2d. The battery packs 2a, 2b, 2c, 2d are electrically connected in parallel with an electric motor drive EMD, including a DC-link capacitor 5, via a traction voltage bus. Each battery pack 2a, 2b, 2c, 2d comprises a battery cell stack 7 and a battery disconnect unit (BDU) 8 for selectively connecting and disconnecting the battery cell stack 7 to/from the traction voltage bus in response to control signals from the ESS control unit 3. The BDU 8 also provides a so-called pre-charge process through a pre-charge resistor and contactor before connecting a main positive contactor of the battery pack. As shown herein, the BDU 8 typically comprises three contactors, of which two are main positive and negative contactors whereas the third one is the pre-charge contactor connected with the pre-charge resistor. The pre-charge process is needed to avoid any large current spike (inrush current) that may happen due to a big voltage difference between the DC-link capacitor 5 and the battery pack 2a, 2b, 2c, 2d.

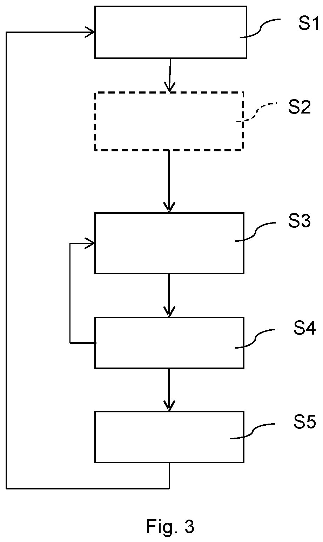

Fig. 3 is a flow-chart illustrating a method according to an embodiment of the invention. In short, the method comprises the steps S1 of obtaining operational data, S2 (optional) of selecting a prioritization strategy, S3 of proposing a connection sequence for connecting the battery packs to the load, S4 of checking feasibility of the proposed connection sequence, and S5 of connecting battery packs to the load in accordance with the proposed connection sequence found to be feasible. The steps S1-S5 are explained in further detail in the following.

S1: Obtaining operational data relating to present operating conditions of the electric energy storage system 1, wherein the operational data include at least a voltage of each one of the plurality of battery packs 2a, 2b, 2c, 2d in the form of a measured terminal voltage and/or an open circuit voltage, OCV. The operational data may further include measurement data in the form of measured terminal current and temperature of each battery pack 2a, 2b, 2c, 2d, at the present time instant, and/or derived operational data such as state-of-charge (SoC), state-of-capacity (SoQ), internal resistance (state-of-resistance, SoR), state-of-power (SoP), state-of-energy (SoE), etc., of each battery pack 2a, 2b, 2c, 2d, at the present time instant, determined based on measurement data relating to current, voltage and temperature of the battery packs 2a, 2b, 2c, 2d. These derived operational parameters may be derived elsewhere and received by the ESS control unit 3, or they may be calculated/estimated by the ESS control unit 3.

S2: Setting a prioritization strategy for electrical connection of the battery packs 2a, 2b, 2c, 2d to the load 4. This step may be carried out before or after the first step S1, or it may be omitted so that the same prioritization strategy is always used. The prioritization strategy may for example be set as one of a first prioritization strategy, according to which it is attempted to maximize the state-of-power of the ESS 1, a second prioritization strategy, according to which it is attempted to minimize the total number of connection instants at which at least one battery pack will be connected to the load, and a third prioritization strategy, according to which it is attempted to maximize the state-of-energy of the ESS 1.

S3: Based on at least an operational mode of the electric energy storage system and on the terminal voltage and/or OCV of each one of the battery packs 2a, 2b, 2c, 2d, and by allowing simultaneous connection of at least two battery packs to the load, proposing a connection sequence for electrically connecting at least a subset of the plurality of battery packs 2a, 2b, 2c, 2d to the load 4. The prioritization strategy is also taken into account when proposing the connection sequence, as will be described by way of example further ahead.

The step S3 of proposing a connection sequence may be carried out by identifying the subset of battery packs to connect and proposing a point in time at which each battery pack within the subset should be connected, such as simultaneously with and/or subsequently to the other battery packs within the subset. Thus, the proposed connection sequence may include connection of one or more battery packs at one connection instance, i.e., point in time, only, or it may include connection of combinations of battery packs at different connection instances. The battery packs may for example be grouped based on terminal voltage and/or OCV, and/or state-of-power, SoP, in order to identify the subset of battery packs to connect.

S4: Based on at least the internal resistance of each one of the battery packs 2a, 2b, 2c, 2d within at least the subset of battery packs, determining whether the proposed connection sequence fulfils a predetermined connection condition. The predetermined connection condition may comprise at least a predetermined circulation current connection condition relating to a circulation current expected to flow between the battery packs upon electrical connection of said subset of battery packs, and preferably also a predetermined state-of-power connection condition relating to a total state-of-power of the electric energy storage system after electrical connection of said subset of battery packs in accordance with the proposed connection sequence, and/or a predetermined state-of-energy connection condition relating to a total state-of-energy of the electric energy storage system after electrical connection of said subset of battery packs in accordance with the proposed connection sequence.

In order to determine if the connection conditions are fulfilled, a magnitude of the circulation current expected to flow between the battery packs 2a, 2b, 2c, 2d upon electrical connection of the subset of battery packs in accordance with the proposed connection sequence may be predicted based on at least the internal resistance and an open circuit voltage of each one of the battery packs 2a, 2b, 2c, 2d. A dynamic multi-battery prediction model may be used to predict the magnitude of the circulation current. It is thereafter determined whether the predicted magnitude of the circulation current is within a predetermined allowable range, in which case the predetermined circulation current connection condition is considered fulfilled, i.e., whether the proposed connection sequence is feasible.

A dynamic state-space model of a parallel multi-battery pack system, derived mainly using single battery models and exploiting parallel connection constraints, may be used as the multi-battery prediction model. Connection or disconnection of any battery pack within this multi-battery model can be achieved by instantaneously toggling between low and high resistance values. In short, a disconnected battery pack, i.e., open contactors, is emulated by putting its resistance infinitely high, or an order of magnitude higher than other connected battery packs. When it is desired to connect that battery pack, i.e., closed contactors, its resistance is lowered to its actual value in a single step. This will enable using the same state-space model for emulating current transients just after the connection instance as well as power split between battery packs during normal steady-state operation long after connection. The following multi-battery state-space model may be used:

$$\dot{x}(t) = A_I(t) \cdot x(t) + B_I(t) \cdot u(t)$$
$$y(t) = C_I(t) \cdot x(t) + D_I(t) \cdot u(t)$$

$$\text{Eq. ( 1 )}$$

Herein, full state of the complete ESS 1 is represented by $x = [x_1 \cdots x_n]^T$, wherein a state of each constituent battery pack $i$ of the ESS is represented by $x_i = [V_{1i} \ V_{2i} \ V_{oci} \ SoC_i \ T_i]^T$, $T$ herein denoting vector transpose. The output of the system is represented by $y = [I_1 \cdots I_n]^T$ where $I_i$ is the output current of each battery pack $i$. The control input of the state-space model is given by $u = [I_{ESS} \ U_{h,1} \cdots U_{h,1}]^T$ wherein $I_{ESS}$ is the total (e.g., total demanded) input current of ESS and $U_{h,I}$ is the total heat generated inside a battery pack $i$.

The system matrix $A_I$, the input matrix $B_I$, the output matrix $C_I$, and the feedthrough matrix $D_I$ are nonlinear functions of system parameters ($R_{0i}$, $R_{1i}$, $R_{2i}$, $C_{1i}$, $C_{2i}$, $Q_i$, $R_{ci^-,1,i}$, $R_{ci}$) and system electro-thermal and ageing states ($SoC_i$, $T_i$, $SoQ_i$, $SoR_i$). Note that as compared to a single battery model, the open circuit voltage of each battery unit has been included as an additional state in order to derive a complete model for parallel multi-battery systems.

Note that above the state-space model is a vector-valued linear differential equation in the time domain (by virtue of the time derivative $\dot{x}$) and such a differential equation may be solved using a standard method, such as the forward/backward Euler method.

As may be gleaned from the above, various system parameters, including battery impedances, capacities, cable connection resistances, temperatures etcetera enter into this model through the above matrices. This enables prediction of load, e.g. power or current, split between battery units with an appropriately high accuracy under given operating conditions.

The full expression for the above state-space multi-battery model is very cumbersome to show here. However, to give some idea about the internal model structure, a simpler version (so-called *zero-order multi-battery model*) is shown below. It is derived by dropping internal slow polarization states (i.e., $V_{1i} = V_{2i} = 0$ or merging them with OCV) and temperature states from the above-mentioned model such that each element in the above-mentioned matrices $A_I$, $B_I$, $C_I$ and $D_I$ relating to internal slow polarizations and temperature is set to zero. Using such an approach for the matrices discussed hereinabove for the above example, viz a system with two battery packs such that n=2, the following equations are obtained for the electric currents for each one of the battery packs:

$$I_1 = \frac{R_{02} + R_{c12}}{\Omega} \cdot I_{ESS} + \frac{1}{\Omega} \cdot (V_{oc2} - V_{oc1})$$

$$I_2 = \frac{R_{01}}{\Omega} \cdot I_{ESS} + \frac{1}{\Omega} \cdot (V_{oc1} - V_{oc2}) \qquad \text{Eq. ( 2 )}$$

$$\Omega = R_{01} + R_{02} + R_{c12}$$

As obvious from the above, the load - here exemplified as the electric current - imparted on each one of the battery units may be determined using *total internal ohmic resistance* values $R_{0i}$ and open circuit voltage value $V_{oci}$ (we may also call this *internal slowly varying voltage* if we assume that slow polarizations are not zero but instead merged with OCV) for each battery unit as well as the connective resistances relating to the position of each battery in the electric energy storage system 1. In the above equations, the connective resistance $R_{c12}$ between the battery units - generally used for a daisy-chain configuration of battery packs - has been employed. However, the above equations could easily be modified so as to also, or instead, include a connective resistance $R_{c1}$, $R_{c2}$ between each battery unit and a reference/connection point in the electric energy storage system 1 - which connective resistance generally is employed for a so-called star configuration of battery packs. For the sake of completeness, it should be noted that there may be a connective resistance $R_{c01}$ between the first battery pack and the load but such a connective resistance $R_{c01}$ may be omitted in the above equations. This is since the connective resistance $R_{c01}$ will form a common resistance in the path of each one of the battery packs and may thus not have any influence of the load distribution among the battery packs.

Moreover, the equation presented hereinabove using the internal ohmic resistance values $R_{0i}$, the open circuit voltage (internal slowly varying voltage) value $V_{oci}$ and zero connective resistances could easily be generalized to the following two equivalent representations of *zero-order multi-battery models* for any number *n* of battery packs.

$$I_i = \frac{1}{\theta} \cdot \prod_{k \neq i}^{n} R_{0k} \cdot I_{ESS} + \frac{1}{\theta} \sum_{k \neq i}^{n} \left( (V_{ock} - V_{oci}) \cdot \prod_{\substack{j \neq k \\ j \neq i}}^{n} R_{0j} \right), \quad \forall i = 1, \dots, n \qquad \text{Eq. ( 3 )}$$

$$\theta = \sum_{i=1}^{n} \left( \prod_{k \neq i}^{n} R_{0k} \right)$$

$$I_i = \frac{1}{R_{0i}} \cdot \left( \frac{I_{ESS} + \sum_{j=1}^{n} \frac{V_{ocj}}{R_{0j}}}{\sum_{j=1}^{n} \frac{1}{R_{0j}}} \right) - \frac{V_{oci}}{R_{0i}}, \qquad \forall i = 1, \dots, n \qquad \text{Eq. ( 4 )}$$

Using Eq. (4) above, the feasibility based on current circulation criterion can, for example, be checked using the following conditions, which basically say that the magnitude of current split/circulation in each battery pack under external load should be less than a certain percentage of its maximum SoP just after connection time instant.

$$\left| \frac{1}{R_{0i}} \cdot \left( \frac{I_{ESS,cha}^{peak} + \sum_{j=1}^{n} \frac{V_{ocj}}{R_{0j}}}{\sum_{j=1}^{n} \frac{1}{R_{0j}}} \right) - \frac{V_{oci}}{R_{0i}} \right| \leq (1 - \delta) \cdot \left| I_{i,cha}^{max} \right|, \quad \forall i = 1, \dots, n \qquad \text{Eq. ( 5 )}$$

$$\left| \frac{1}{R_{0i}} \cdot \left( \frac{I_{ESS,dch}^{peak} + \sum_{j=1}^{n} \frac{V_{ocj}}{R_{0j}}}{\sum_{j=1}^{n} \frac{1}{R_{0j}}} \right) - \frac{V_{oci}}{R_{0i}} \right| \leq (1 - \delta) \cdot \left| I_{i,dch}^{max} \right|, \quad \forall i = 1, \dots, n \qquad \text{Eq. ( 6 )}$$

where $I_{ESS,cha}^{peak}$ is a maximum peak (i.e., maximum possible) charging load on ESS, $I_{ESS,dch}^{peak}$ is a peak discharging load on ESS (not necessarily same as ESS SoPs $I_{ESS,cha}^{max}$ and $I_{ESS,dch}^{max}$ ), $\delta \in [0,1]$ is a tuning parameter determining the margin until a SoP limit is violated, and i represents an individual battery pack. The sums, $\sum_{j=1}^{n} \frac{V_{ocj}}{R_{0j}}$ and $\sum_{j=1}^{n} \frac{1}{R_{0j}}$, will be same for all battery packs and it is therefore enough to calculate them once for each combination. It is also possible to save computations by utilizing previous calculations of the sums.

Furthermore, a total expected state-of-power, SoP, of the ESS 1 upon electrical connection of said subset of battery packs 2a, 2b, 2c, 2d in accordance with the proposed connection sequence may be predicted according to known methods, e.g., based on the SoP of individual battery packs or using an ESS-level multi-battery model, taking also interactions and current distribution between individual battery packs into account. For example, the above zero-order multi-battery model [see Eq. (3) and Eq. (4)] can also be used to compute ESS SoP. In short, using given chargeable SoPs, dischargeable SoPs, ohmic resistances, and OCVs of each individual battery pack i, we solve the model for maximum value of chargeable current ability $I_{ESS,cha}^{max}$ and dischargeable current ability $I_{ESS,dch}^{max}$ (i.e., ESS SoP Charge or Discharge magnitude) respectively as shown below.

$$I_{ESS,cha}^{max} = \left( \sum_{i=1}^{n} \frac{1}{R_{0i}} \right) \cdot \min_{i \in 1, \cdots, n} \left\{ \left( R_{0i} \cdot I_{i,cha}^{max} + V_{oci} \right) \right\} - \sum_{i=1}^{n} \frac{V_{oci}}{R_{0i}} \qquad \text{Eq. ( 7 )}$$

$$I_{ESS,dch}^{max} = \left(\sum_{i=1}^{n} \frac{1}{R_{0i}}\right) \cdot \max_{i \in 1, \cdots, n} \left\{ \left(-R_{0i} \cdot I_{i,dch}^{max} + V_{oci}\right) \right\} - \sum_{i=1}^{n} \frac{V_{oci}}{R_{0i}} \qquad \text{Eq. ( 8 )}$$

In Eq. (8), a minus sign is used with $R_{0i} \cdot I_{i,dch}^{max}$ to address the fact that $I_{i,dch}^{max}$ is a magnitude of SoP and is thus not a signed quantity as typically used for discharge currents. Note that the above equations for $I_{ESS,cha}^{max}$ and $I_{ESS,dch}^{max}$ can also be derived as a solution to a constrained Linear Programming problem using zero-order multi-battery model. The full-order multi-battery state-space model [see Eq. (1)] can also be used, but then it is necessary to solve a constrained Nonlinear Programming problem that is relatively hard. Regardless of the methods used, once the predicted SoP values for a selected candidate of future ESS configuration (i.e., a proposed connection sequence) are known, the predetermined state-of-power connection condition may be considered to be fulfilled if the predicted total expected SoP is above a predetermined total SoP threshold.

In addition, the best battery combination for connection that maximizes the ESS SoP can also be found. This can be achieved by devising a simple algorithm where ESS SoP for each possible battery combination, i.e., ESS configuration, is first found, whereafter the best one that gives the maximum ESS SoP value among all combinations is selected. For example, the algorithm may comprise the following steps:

1) enumerating each possible ESS configuration and store them in a table;

2) using Eq. (7) and Eq. (8) to find ESS SoPs (i.e., $I_{ESS,cha}^{max}$ and $I_{ESS,dch}^{max}$) for each possible ESS configuration;
3) assigning each ESS SoP value to its corresponding ESS configuration in a table and sort them in a descending order; and
4) finally choosing the ESS configuration corresponding to the top ESS SoP value.

Note that Eq. (7) and Eq. (8) pose very low computational burden, so the proposed optimization method based on exhaustive search is practically feasible in real-time for a large of number of battery packs.

The predetermined state-of-power connection condition may additionally be related to an SoP difference between the battery packs 2a, 2b, 2c, 2d. In this case, an SoP of each one of the battery packs 2a, 2b, 2c, 2d within the subset of battery packs is determined, and it is checked whether a difference in state-of-power between the battery packs 2a, 2b, 2c, 2d within the subset is below a predetermined state-of-power difference threshold, in which case the predetermined state-of-power connection condition may be considered fulfilled.

S5: Electrically connecting at least the subset of battery packs 2a, 2b, 2c, 2d to the load 4 in accordance with the proposed connection sequence. This step is only performed if the connection condition is considered to be fulfilled in step S4.

The steps S1-S5 may be repeated until all battery packs 2a, 2b, 2c, 2d are connected to the load 4. Herein, it is differentiated between so-called internal iterations (i.e., iterations based on internal virtual feedback) and so-called external iterations (i.e., iterations based on external real feedback). In short, for each given external feedback data regarding present operating conditions of the battery packs, multiple internal iterations are carried out until a feasible connection sequence is found under those given operating conditions. In the next external iteration, new operating conditions are provided in the form of new measurement data, which may allow a different feasible connection sequence, identified again through multiple internal iterations.

The method may also comprise disconnecting one or more battery packs 2a, 2b, 2c, 2d from the load 4. In this case, after connection of at least the subset of battery to the load 4, it is determined whether a predetermined disconnection condition is fulfilled for disconnection of at least one battery pack within the subset of battery packs 2a, 2b, 2c, 2d. Only if the predetermined disconnection condition is fulfilled, the at least one battery pack 2a, 2b, 2c, 2d is disconnected from the load 4.

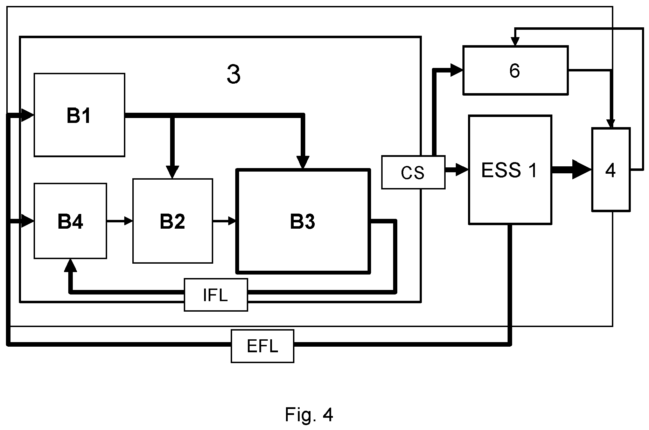

Fig. 4 is a block diagram illustrating how the method may be carried out in a vehicle powertrain comprising an ESS 1 according to an exemplary embodiment of the method according to the invention, such as the ESS 1 shown in fig. 2 comprising four battery packs 2a, 2b, 2c, 2d. In this embodiment, the vehicle powertrain comprises a load 4 and a power train controller 6 controlling the load 4 based on input from an ESS control unit 3 and on feedback from the load 4. The ESS control unit 3 is configured to determine a connection sequence CS for connecting battery packs 2a, 2b, 2c, 2d to the load 4 in accordance with the proposed method, to output the determined connection sequence CS to the powertrain controller, and to control the ESS 1 to connect the battery packs in accordance with the connection sequence.

A first block B1 is provided for performing battery state estimations and predictions, e.g., estimating and/or predicting OCV, SoH, SoR, SoC, SoE, SoQ, SoP, etc., of the individual battery packs 2a, 2b, 2c, 2d of the ESS. This block may also be provided elsewhere, e.g., in battery control units of the individual battery packs, i.e., BMUs.

A second block B2 is provided for sequencing, i.e., propose a connection sequence for electrically connecting at least a subset of the plurality of battery packs 2a, 2b, 2c, 2d to the load 4. This block virtually tests different connection sequences based on a selected prioritization strategy, and on input received from the first block.

A third block B3 is provided for predicting power sharing dynamics by simulating the ESS using a multi-battery model. This block predicts e.g., an expected total SoP of the ESS 1 and expected circulation currents as a result of connecting the proposed connection sequence received from the second block. The third block uses input data from the first block as well as from the second block.

A fourth block B4 is provided for performing a feasibility check, i.e., checking whether the proposed connection sequence fulfils predetermined connection conditions. In this block, an analysis of the predicted power sharing dynamics is performed. An internal feedback loop IFL is for this purpose provided, feeding results from the simulations performed in the third block to the fourth block. If the proposed connection sequence is not found to be feasible, information is provided to the second block, which proposes another connection sequence in an iterative manner

In addition to the internal feedback loop IFL, an external feedback loop EFL is also provided for feeding real-time measurement data and/or derived operational data from the ESS 1 as input to at least the fourth block B4 and the first block B1. This enables continuous updating and adaptation so that the algorithm used to determine the connection sequence may be improved over time.

EXAMPLE

According to an example, a method for connecting four battery packs 2a, 2b, 2c, 2d to a load 4 according to two different prioritization strategies will be described in the following. The operational mode of the ESS 1 is a discharging mode, so the battery packs 2a, 2b, 2c, 2d are sorted in ascending order according to open circuit voltage $V_{oci}$ of each battery pack $i \in \{2a, 2b, 2c, 2d\}$. Note that open circuit voltage can be assumed almost equal to terminal voltage when battery packs are disconnected and fairly relaxed. For simplicity, it is assumed that the battery pack 2a has the highest terminal voltage and/or open circuit voltage $V_{oc, 2a}$ and the battery pack 2d has the lowest terminal voltage and/or open circuit voltage $V_{,1,2d}$, i.e., $v_{oc,2a} > V_{oc,2b} > V_{oc,2c} > V_{oc,2d}$. Since the operational mode is a discharging mode, the battery pack 2a having the highest terminal voltage should according to both prioritization strategies be included in the subset of battery packs to be connected at a first connection instant.

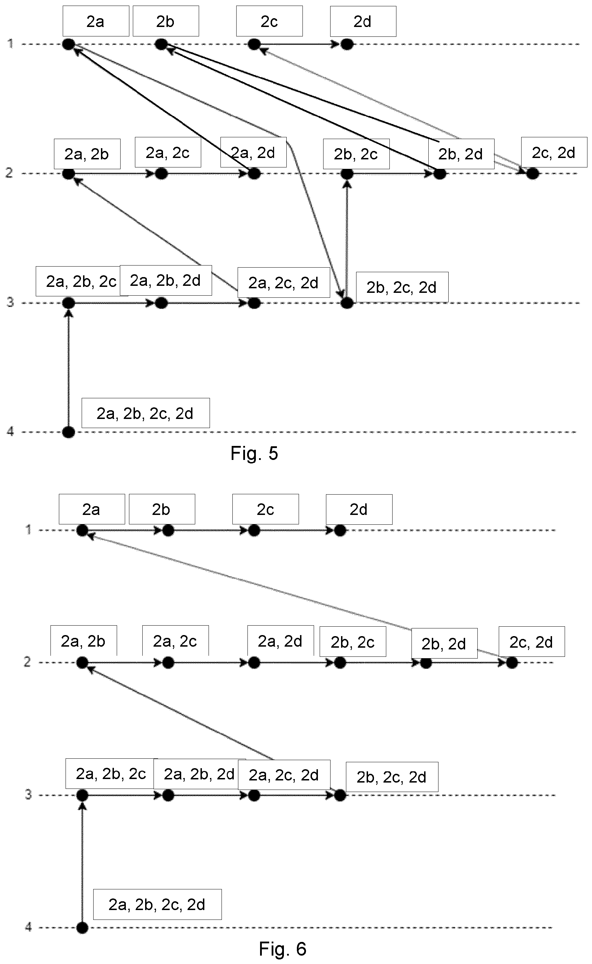

According to a first prioritization strategy illustrated in fig 5, the aim is firstly to maximize the power ability, SoP, of the ESS, and secondly to minimize the number of connection instances. The overall aim is thus to maximize the power ability of the ESS. Thus, it is preferable to connect as many battery packs as possible at once to the load. In step S3, a connection sequence involving simultaneous connection of all four battery packs 2a, 2b, 2c, 2d is therefore proposed, as illustrated in the lower left corner of fig. 6. Step S4 is thereafter carried out to check if the proposed connection sequence fulfils the predetermined connection condition. If yes, all four battery packs are connected at once. If not, step S3 is repeated to propose a next best connection sequence and its feasibility is checked in step S4. In this example, the next best connection sequence involves simultaneous connection of the three battery packs 2a, 2b, 2c having the highest terminal voltage, and/or open circuit voltage. If this connection sequence does not fulfil the predetermined connection sequence, steps S3-S4 are repeated until a feasible connection sequence is proposed. The proposed connection sequences are illustrated by following the arrows in fig. 5. Thus, the least preferable connection sequence involves connection of the single battery pack 2d having the lowest terminal voltage, and/or open circuit voltage $V_{oc,2d}$.

According to a second prioritization strategy illustrated in fig. 6, the aim is firstly to minimize the number of connection instances so as to improve driveability of the vehicle, and secondly to maximize the power ability, SoP, of the ESS. Thus, also in this case, it is preferable to connect as many battery packs as possible at once to the load, i.e., all battery packs 2a, 2b, 2c, 2d. If that connection sequence is not feasible, other sequences are checked in order of preference. As can be seen by following the arrows in fig. 6, the order of preference differs slightly from the one of the first prioritization strategy.

The same connection sequences can be used for the charging mode. The only difference is that the sorting should be in ascending order, i.e., $V_{oc,2a} < V_{oc,2b} < V_{oc,2c} < V_{oc,2d}$.

It is to be understood that the present invention is not limited to the embodiments described above and illustrated in the drawings; rather, the skilled person will recognize that many changes and modifications may be made within the scope of the appended claims. For example, the method may be adapted for controlling also disconnection of battery packs from a load, based on the same strategies as used for controlling connection.

**Claims**

1. A method for controlling electrical connection of a plurality of battery packs (2, 2a, 2b, 2c, 2d) of an electric energy storage system (1) to a load (4), the plurality of battery packs (2, 2a, 2b, 2c, 2d) being configured to be selectively connected in parallel to the load (4), the method comprising the steps of:

   - obtaining (S1) operational data relating to present operating conditions of the electric energy storage system (1), wherein the operational data include at least a voltage of each one of the plurality of battery packs (2, 2a, 2b, 2c, 2d);
   - based on at least an operational mode of the electric energy storage system (1) and on the voltage of each one of the battery packs (2, 2a, 2b, 2c, 2d), and by allowing simultaneous connection of at least two battery packs to the load (4), proposing (S3) a connection sequence for electrically connecting at least a subset of the plurality of battery packs (2, 2a, 2b, 2c, 2d) to the load (4);
   - electrically connecting (S5) at least the subset of battery packs to the load (4) in accordance with the proposed connection sequence;

   **characterized in that**
   the method further comprises the step of:

   - prior to connecting at least the subset of battery packs to the load (4), and based on at least an internal resistance of each one of the battery packs (2, 2a, 2b, 2c, 2d) within at least the subset of battery packs, determining (S4) whether the proposed connection sequence fulfils a predetermined connection condition, wherein the step of connecting at least the subset of battery packs to the load (4) is only performed if the connection condition is considered to be fulfilled.

2. The method according to claim 1, wherein, if the connection condition is not considered to be fulfilled, at least the steps of proposing (S3) a connection sequence and determining (S4) whether the proposed connection sequence fulfils the predetermined connection condition are repeated until the connection condition is considered to be fulfilled.

3. The method according to claim 1 or 2, wherein, if the connection condition is not considered to be fulfilled for any proposed connection sequence involving simultaneous connection of at least two battery packs, the method comprises:

   - subject to a predefinable power constraint, connecting a single battery pack of the plurality of battery packs (2, 2a, 2b, 2c, 2d) to the load (4);
   - optionally, determining an earliest point in time at which the steps of proposing a connection sequence and determining whether the proposed connection sequence fulfils the predetermined connection condition will be repeated after connection of the single battery pack.

4. The method according to any one of the preceding claims, wherein the predetermined connection condition comprises at least a predetermined circulation current connection condition relating to a circulation current expected to flow between the battery packs (2, 2a, 2b, 2c, 2d) upon electrical connection of said subset of battery packs, and optionally a predetermined state-of-power connection condition relating to a total state-of-power of the electric energy storage system (1) after electrical connection of said subset of battery packs in accordance with the proposed connection sequence, and/or optionally a predetermined state-of-energy connection condition relating to a total state-of-energy of the electric energy storage system (1) after electrical connection of said subset of battery packs in accordance with the proposed connection sequence.

5. The method according to claim 4, wherein the step of determining whether the proposed connection sequence fulfils the predetermined connection condition comprises at least:

   - based on at least the internal resistance and an open circuit voltage of each one of the battery packs (2, 2a, 2b, 2c, 2d), predicting a magnitude of the circulation current expected to flow between the battery packs (2, 2a, 2b, 2c, 2d) upon electrical connection of said subset of battery packs in accordance with the proposed connection sequence,
   - determining whether the predicted magnitude of the circulation current is within a predetermined allowable range.

6. The method according to claim 4 or 5, wherein the predetermined connection condition comprises the predetermined state-of-power connection condition, and wherein the step of determining whether the proposed connection sequence fulfils the predetermined connection condition comprises:

- determining a state-of-power, SoP, of each one of the battery packs (2, 2a, 2b, 2c, 2d) within the subset of battery packs,
- determining whether a difference in state-of-power between the battery packs (2, 2a, 2b, 2c, 2d) within the subset is below a predetermined state-of-power difference threshold.

7. The method according to any one of the preceding claims, wherein the step of proposing a connection sequence comprises:

- identifying the subset of battery packs to connect, and
- proposing a point in time at which each battery pack (2, 2a, 2b, 2c, 2d) within the subset should be connected, such as simultaneously with and/or subsequently to the other battery packs within the subset.

8. The method according to any one of the preceding claims, further comprising:

- setting (S2) a prioritization strategy for electrical connection of the battery packs (2, 2a, 2b, 2c, 2d) to the load;

wherein the set prioritization strategy is taken into account in the step of proposing said connection sequence.

9. The method according to claim 8, wherein the set prioritization strategy is one of a first prioritization strategy, a second prioritization strategy, and a third prioritization strategy, wherein:

- using the first prioritization strategy, the connection sequence is proposed so as to maximize the state-of-power of the electric energy storage system (1),
- using the second prioritization strategy, the connection sequence is proposed so as to minimize the total number of connection instants at which at least one battery pack (2, 2a, 2b, 2c, 2d) will be connected to the load, and
- using the third prioritization strategy, the connection sequence is proposed so as to maximize the state-of-energy of the electric energy storage system (1).

10. The method according to claim 8 or 9, wherein the predetermined connection condition is set in dependence on the selected prioritization strategy.

11. The method according to any one of the preceding claims, further comprising:

- repeating the method steps until all battery packs (2, 2a, 2b, 2c, 2d) of the electric energy storage system (1) are connected.

12. The method according to any one of the preceding claims, further comprising:

- after connection of at least the subset of battery packs to the load (4), determining whether a predetermined disconnection condition is fulfilled for disconnection of at least one battery pack (2, 2a, 2b, 2c, 2d) within the subset of battery packs,
- only if the predetermined disconnection condition is fulfilled, disconnecting the at least one battery pack from the load (4).

13. A control unit (3) of an electric energy storage system (1) comprising at least two battery packs (2, 2a, 2b, 2c, 2d) configured to be selectively electrically connected in parallel, wherein the control unit (3) is configured to execute the steps of the method according to any one of claims 1-12.

14. A computer program comprising instructions to cause a computer to execute the steps of the method according to any one of claims 1-12.

15. A computer readable medium having stored thereon the computer program according to claim 14.

16. An electric energy storage system (1) comprising at least two battery packs (2, 2a, 2b, 2c, 2d) configured to be selectively electrically connected in parallel and a control unit (3) according to claim 13.

17. A vehicle (100) comprising an electric energy storage system (1) according to claim 16.

Fig. 1

Fig. 2

Fig. 3

Fig. 4

Fig. 5

Fig. 6

Europäisches
Patentamt

European
Patent Office

Office européen
des brevets

# EUROPEAN SEARCH REPORT

Application Number

EP 21 15 0101

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2019/123568 A1 (KANEKO KAZUMI [JP]) 25 April 2019 (2019-04-25) * paragraphs [0018], [0020], [0033] - [0039], [0051], [0054]; figures 1,2 * | 1-17 | INV. B60L58/21 |
| X | EP 2 775 585 A1 (NISSAN MOTOR [JP]) 10 September 2014 (2014-09-10) * paragraphs [0022] - [0028]; figures 1-2 * | 1-17 | |
| X | US 2017/166075 A1 (HONG MICHAEL [US] ET AL) 15 June 2017 (2017-06-15) * paragraphs [0027] - [0031], [0048] - [0051]; figure 2 * | 1-17 | |
| X,D | US 2015/194707 A1 (PARK JIN-HYUK [KR]) 9 July 2015 (2015-07-09) * paragraphs [0063] - [0071], [0113] - [0117]; figures 1-5 * | 1-17 | |

TECHNICAL FIELDS
SEARCHED    (IPC)

B60L

The present search report has been drawn up for all claims

| Place of search | Date of completion of the search | Examiner |
|---|---|---|
| The Hague | 18 June 2021 | Bellatalla, Filippo |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 21 15 0101

This annex lists the patent family members relating to the patent documents cited in the above-mentioned European search report.
The members are as contained in the European Patent Office EDP file on
The European Patent Office is in no way liable for these particulars which are merely given for the purpose of information.

18-06-2021

| Patent document cited in search report | | Publication date | Patent family member(s) | | Publication date |
|---|---|---|---|---|---|
| US 2019123568 | A1 | 25-04-2019 | CN | 107863790 A | 30-03-2018 |
| | | | EP | 3518382 A1 | 31-07-2019 |
| | | | JP | 6664005 B2 | 13-03-2020 |
| | | | JP | WO2018056262 A1 | 25-04-2019 |
| | | | KR | 20180122428 A | 12-11-2018 |
| | | | US | 2019123568 A1 | 25-04-2019 |
| | | | WO | 2018056262 A1 | 29-03-2018 |
| EP 2775585 | A1 | 10-09-2014 | CN | 103918156 A | 09-07-2014 |
| | | | EP | 2775585 A1 | 10-09-2014 |
| | | | JP | 6119143 B2 | 26-04-2017 |
| | | | JP | 2013118800 A | 13-06-2013 |
| | | | US | 2014265600 A1 | 18-09-2014 |
| | | | WO | 2013065454 A1 | 10-05-2013 |
| US 2017166075 | A1 | 15-06-2017 | CN | 106882059 A | 23-06-2017 |
| | | | US | 2017166075 A1 | 15-06-2017 |
| US 2015194707 | A1 | 09-07-2015 | KR | 20150081731 A | 15-07-2015 |
| | | | US | 2015194707 A1 | 09-07-2015 |

EPO FORM P0459

For more details about this annex : see Official Journal of the European Patent Office, No. 12/82

**EP 4 023 487 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20150194707 A